# EUROPEAN PATENT APPLICATION

(11) **EP 2 241 767 A1**
(43) Date of publication of application: **20.10.2010**
(21) Application number: 08870314.5
(22) Date of filing: 16.12.2008
(51) Int. Cl.: F16B 19/08, F16B 5/02, F16B 29/00

(54) **UNIVERSAL ELASTIC RIVET**

(30) Priority: 04.01.2008 ES 200800007
(71) Applicant: Elduayen Madariaga, Juan Andrés, 20150 Aduna (Gipuzkoa) (ES); Sanchez Garduño, Javier, 20303 Irun, Guipuzcoa (ES)
(72) Inventor: Elduayen Madariaga, Juan Andrés, 20150 Aduna (Gipuzkoa) (ES); Sanchez Garduño, Javier, 20303 Irun, Guipuzcoa (ES)
(74) Representative: Igartua, Ismael
(86) International application number: PCT/ES2008/000782
(87) International publication number: WO 2009/087245

(57) **Abstract**

The invention relates to a universal elastic rivet formed by an elastic body (1), a pin (2) and a washer (3) all of which are mounted coaxially, said elastic body (1) being disposed between a head (21) of the pin (2) and the washer (3). The elastic body (1) also includes an external peripheral flange (11) which, during riveting, is disposed between the components (C, C2) to be riveted, preventing the transmission of vibration and noise there between.

## Description

The current prior art contains various types of rivets to fix between them a plurality of elements, among them, for example, the documents ES2228503, ES2247173, ES2268139 and ES2267470 (in recent technology) and the documents ES0290910 and ES273562 (in older technology).

These known rivets are used to join different materials in a rapid and simple manner but do not prevent the transmission of noise, vibrations and movement between them, and are not adapted to withstand the contracting and expanding of different types of materials.

The object of the invention is a universal elastic rivet with a new structure, made up of an elastic body, a rod and a washer mounted coaxially, this elastic body being disposed between the head of the rod and the washer.

Said elastic body comprises an external peripheral projection, which, in the riveting process, is disposed between the components to be riveted, preventing the transmission of vibrations and noise between them, thereby resolving the aforementioned problem, it being based on a simple and extremely effective solution.

In order to provide a better understanding of the object of the invention a preferred practical embodiment, which may be subject to accessory changes that do not alter its basic principles, is shown in the plans.
Figure 1 shows a general view of a universal elastic rivet, according to the invention, in which its components, structure and specific features may be seen.

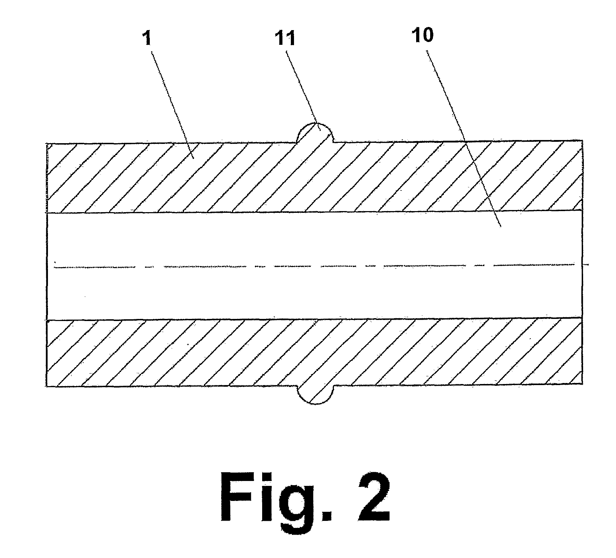

Figure 2 shows a general cross-section of the elastic body (1) only, taken from an A-A line of the preceding figure.
Figures 3a to 3d schematically represent various phases of an elastic joint in accordance with the invention:

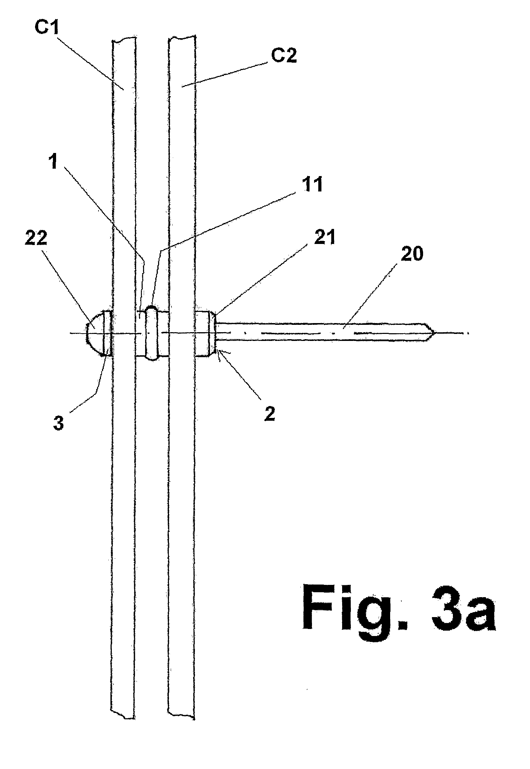

   - Figures 3a: the introduction of the elastic rivet that is the object of the invention in the drill holes of two components (C1), (C2) to be joined.

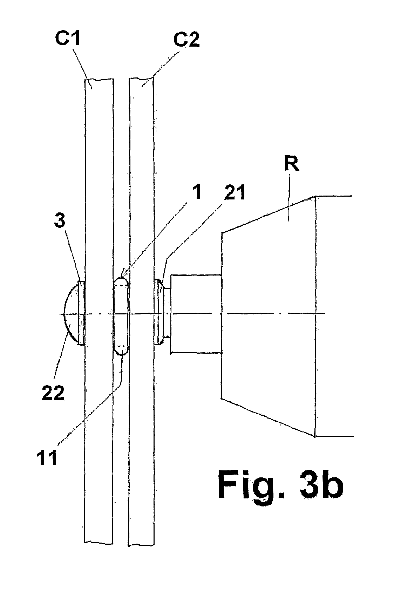

   - Figures 3b: the start of the deformation of the elastic body (1), when the body of the rod is driven, for example, with a riveter (R).

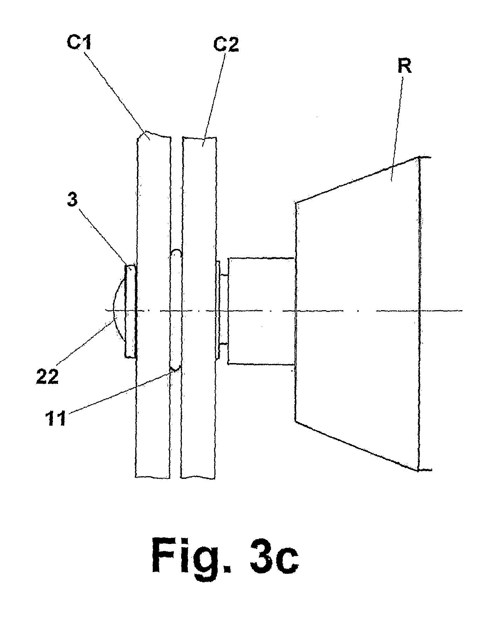

   - Figure 3c: the contraction and elastic fastening of the components (C1), (C2).

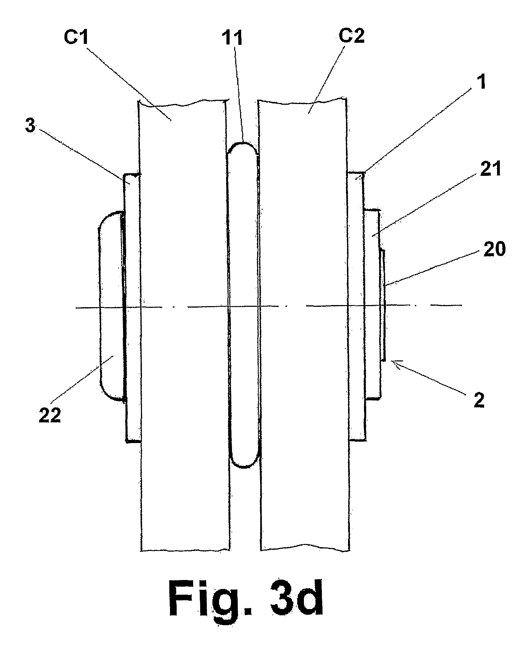

   - Figure 3d: the breakage of the body (20) of the rod (2) and completed elastic joint.

A non-limiting description of an example of the practical embodiment of the invention is given below:
The object of the invention is a universal elastic rivet, made up of an elastic body (1), a rod (2) and a washer (3).

In accordance with the invention and according to the embodiment shown:
- the elastic body (1) has an axial hole (10) and is provided with an external peripheral projection (11). It is preferably a revolving body;
- the rod (2) has an elongated configuration and is provided with two heads (21), (22) on its ends, between which is positioned the elastic body (1), it being housed in the axial hole (10) of said elastic body (1), beyond which its elongated body (20) extends;
- the washer (3) is disposed between the head (22) of the rod (2) and one of the bases of the elastic body (1).

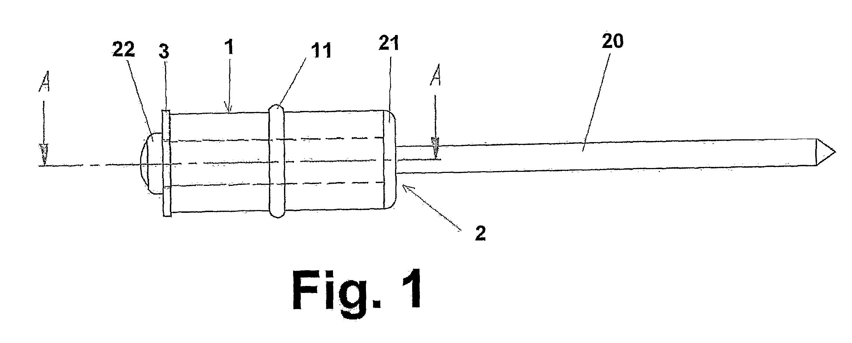

More specifically, in the embodiment shown in Figure 1 the elastic rivet of the invention has the specific feature of being formed from an elastic body (1) with a circular cross-section, and which may be cylindrical or tapered and is provided with an axial hole or through-hole (10) into which is fitted a rigid or semi-rigid rod (2) or a conventional rivet.

Said rod (2) presents on one of its ends a head (21) that comes up against the end of the elastic body (1), whereas the opposite end is tapered or pointed and reaches the exterior through the other end of the aforementioned elastic body (1), there being a rigid or semi-rigid stopper washer (3) on this end.

The elastic body (1), with the rod-rivet (2) and the washer (3), form a single unit that is inserted in the holes of the members (C1), (C2) to be joined, with the result that by means of an appropriate tool, such as a riveter (R), the pointed end (20) of the rod (2) is driven, causing it to slide and, as a result, the elastic body (1) to contract between the aforementioned head of the rod (21) and the washer (3), a contraction that results in the expansion of the flexible body (1) and the consequent elastic union of the members (C1), (C2).

## Claims

1. Universal elastic rivet, **characterised in that**:
a) it is made up of an elastic body (1), a rod (2) and a washer (3) assembled coaxially; this elastic body (1) being disposed between a head (21) of the rod (2) and the washer (3);
b) said elastic body (1) comprises an external peripheral projection (11), which, in the riveting process, is disposed between the components (C), (C2) to be riveted, preventing the transmission of vibrations and noise between them.

2. Universal elastic rivet according to claim 1, **characterised in that** the rod (2) is rigid or semi-rigid.

3. Universal elastic rivet 1, **characterised in that** the rod (2) is a metal stud or pin.
